(19) Europäisches Patentamt
European Patent Office
Office européen des brevets

(11) **EP 2 476 094 B1**

(12) **FASCICULE DE BREVET EUROPEEN**

(45) Date de publication et mention
de la délivrance du brevet:
**05.03.2014 Bulletin 2014/10**

(21) Numéro de dépôt: **10762998.2**

(22) Date de dépôt: **23.08.2010**

(51) Int Cl.:
**G06T 7/00** *(2006.01)*    **G08G 1/054** *(2006.01)*

(86) Numéro de dépôt international:
**PCT/FR2010/051759**

(87) Numéro de publication internationale:
**WO 2011/030034 (17.03.2011 Gazette 2011/11)**

(54) **PROCÉDÉ D'INSTALLATION D'UN APPAREIL DE CÔNTROLE DE VÉHICULES**

**VERFAHREN ZUR INSTALLATION EINER FAHRZEUGÜBERWACHUNGSVORRICHTUNG**

**METHOD FOR INSTALLING A VEHICLE-MONITORING APPARATUS**

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **10.09.2009 FR 0956191**

(43) Date de publication de la demande:
**18.07.2012 Bulletin 2012/29**

(73) Titulaire: **MORPHO
92130 Issy Les Moulineaux (FR)**

(72) Inventeurs:
• **CLAUDON, Jérôme
F-75015 Paris (FR)**
• **HAEBERLIN, Antonin
F-75015 Paris (FR)**

(74) Mandataire: **Cabinet Plasseraud
52, rue de la Victoire
75440 Paris Cedex 09 (FR)**

(56) Documents cités:
**US-A- 3 579 236**

• **ROY A ET AL: "Fusion of Doppler Radar and video information for automated traffic surveillance", INFORMATION FUSION, 2009. FUSION '09. 12TH INTERNATIONAL CONFERENCE ON, IEEE, PISCATAWAY, NJ, USA, 6 juillet 2009 (2009-07-06), pages 1989-1996, XP031512037, ISBN: 978-0-9824438-0-4**
• **YUANTAO LI ET AL: "On Automatic and Dynamic Camera Calibration based on Traffic Visual Surveillance", INTELLIGENT VEHICLES SYMPOSIUM, 2007 IEEE, IEEE, PI, 1 juin 2007 (2007-06-01), pages 358-363, XP031126970, ISBN: 978-1-4244-1067-5**

**Description**

La présente invention concerne un procédé d'installation d'un appareil de contrôle de véhicules qui circulent sur une route. Elle concerne aussi un programme et un ensemble de contrôle de véhicules pour mettre en oeuvre le procédé.

En particulier, l'invention peut être appliquée à un appareil de contrôle des vitesses des véhicules qui circulent sur la route.

De façon connue, un appareil de contrôle de vitesses de véhicules comprend un système de mesure de vitesse qui est couplé à un système photographique. L'appareil est destiné à être disposé sur un abord de route, en étant orienté en direction d'un véhicule dont la vitesse doit être contrôlée.

Le système de mesure de vitesse est couramment appelé radar, et est basé sur l'effet Doppler. Le principe d'une telle mesure est bien connu, si bien qu'il n'est pas nécessaire de l'expliquer à nouveau. Il est seulement rappelé que la mesure de la vitesse du véhicule est fondée sur la composante radiale de cette vitesse qui est parallèle à la direction qui relie le véhicule au système de mesure de vitesse, au moment de la mesure. La composante transversale de la vitesse du véhicule, qui est perpendiculaire à la direction véhicule-système de mesure, n'intervient pas dans l'effet Doppler. Le résultat de la mesure de vitesse dépend donc de façon critique de la valeur de l'angle qui sépare la direction de déplacement du véhicule et la direction véhicule-système de mesure. Pour cette raison, il est indispensable de déterminer avec précision la valeur de cet angle avant qu'une mesure de vitesse soit effectuée. Des règlements fixent cette précision, par exemple à $\pm 0,5°$ (degré) près, ou à $\pm 0,65\%$ près selon l'origine du règlement qui est appliqué. De façon usuelle, le fournisseur du système de mesure de vitesse peut recommander une valeur pour l'angle entre la direction de déplacement du véhicule et la direction véhicule-système de mesure, par exemple environ 25°.

Le système photographique produit une ou plusieurs image(s) du véhicule dont la vitesse est contrôlée. Cette ou ces image(s) permet(tent) d'identifier le véhicule, notamment, par le numéro de sa plaque minéralogique.

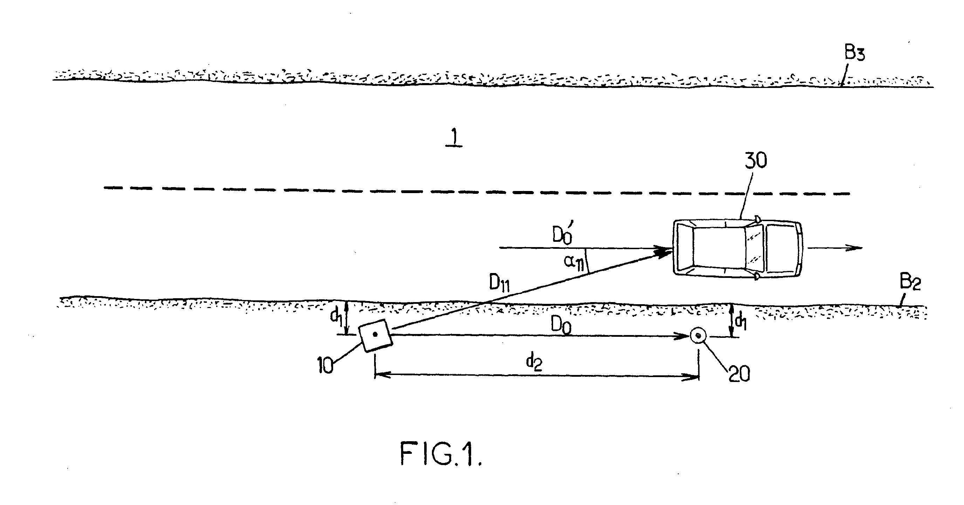

L'installation de l'appareil de contrôle de vitesse pour une session de contrôle routier est effectuée couramment de la façon suivante, en référence à la figure 1. L'appareil 10 est disposé sur un bas-côté de la route 1, à une distance de retrait $d_1$ par rapport au bord $B_2$ de la route. Un opérateur du contrôle va alors poser un jalon 20 sur le même bas-côté de la route, à une distance d'éloignement $d_2$ de l'appareil 10, qui est mesurée parallèlement à la route, et à la même distance de retrait $d_1$ par rapport au bord $B_2$ de la route. Par exemple, la distance de retrait $d_1$ et la distance d'éloignement $d_2$ sont respectivement de 1 m (mètre) et 25 m. La direction qui relie l'appareil 10 au jalon 20 est notée $D_0$. Elle est prise pour référence pour déterminer l'angle $\alpha_{11}$ entre la direction $D_0$' du déplacement du véhicule 30 et la direction $D_{11}$ qui relie l'appareil 10 au véhicule 30. Pratiquement, les direction $D_0$ et $D_0$' sont supposées parallèles, et la direction $D_{11}$ est l'axe radioélectrique du système de mesure de vitesse 11. La précision de la détermination de l'angle $\alpha_{11}$ dépend donc directement de la précision avec laquelle les distances $d_1$ et $d_2$ ont été mesurées. Or les difficultés suivantes sont rencontrées dans la pratique :

- le bord $B_2$ de la route 1 peut être dégradé localement, avec une limite entre le revêtement de la route et la terre du bas-côté qui est irrégulière, de sorte que la distance de retrait $d_1$ ne peut pas être mesurée précisément pour l'appareil 10 et pour le jalon 20 ;

- la route 1 peut être équipée d'une rambarde ou d'une glissière de protection sur le bas-côté, ce qui rend encore plus difficile la mesure de la distance de retrait $d_1$ ;

- l'opérateur doit marcher le long de la route 1 sur la distance $d_2$, ce qui peut être dangereux à cause des véhicules qui passent près de lui ;

- la mesure de la distance d'éloignement $d_2$ nécessite un instrument spécifique, dont l'utilisation est le plus souvent mal commode dans l'espace restreint du bas-côté de la route 1 ;

- la mesure des deux distances $d_1$ et $d_2$ peut être longue lorsque l'appareil de contrôle 10 est installé par un opérateur qui est seul ; et

- la mesure des distances $d_1$ et $d_2$ est encore plus difficile la nuit, pour un contrôle routier nocturne.

Ces difficultés pratiques rendent donc fastidieux, longs et difficiles la détermination et l'ajustement de l'angle $\alpha_{11}$ entre la direction de déplacement du véhicule qui est contrôlé et l'axe radioélectrique du système de mesure. Pour ces raisons, la précision de la détermination de cet angle telle qu'elle vient d'être décrite peut faire l'objet d'incertitudes.

En outre, dans certains cas ou selon les règlements en vigueur, le règlement d'exécution du contrôle de vitesse peut imposer qu'une preuve soit fournie, qui montre que l'angle $\alpha_{11}$ a été dûment déterminé et ajusté pour la session de contrôle routier. Pour cela, des photos sont prises de l'opérateur en train de poser le jalon 20, et qui montrent la mesure des distances $d_1$ et $d_2$. Ces photos doivent alors être accessibles à partir du dossier du contrôle de chaque véhicule dont la vitesse est excessive. Or cette procédure de validité du contrôle routier est aussi elle-même fastidieuse.

Compte tenu des difficultés pratiques qui viennent d'être rappelées, pour installer l'appareil de contrôle de vitesse, et des conditions de validité du contrôle routier, l'invention vise certains au moins des buts suivants :

- augmenter la précision de la détermination et de l'ajustement de l'angle entre la direction de déplacement des véhicules et l'axe radioélectrique du système de mesure ;

- simplifier et rendre plus rapide l'installation de l'appareil de contrôle de vitesse sur le bas-côté de la route ;

- améliorer la sécurité de l'opérateur qui effectue le contrôle routier ;

- supprimer une incertitude concernant un parallélisme entre les directions $D_0$ et $D_0'$, lorsque la route présente un rétrécissement ou un élargissement progressif, ou encore lorsqu'une voie d'accès ou de sortie en biais est présente ;

- produire une preuve de la valeur de l'angle entre la direction de déplacement des véhicules et l'axe radioélectrique du système de mesure, qui puisse rester facilement dans le dossier d'infraction et être accessible en cas de besoin.

Pour atteindre ces buts et d'autres, l'invention propose un procédé d'installation d'un appareil de contrôle de véhicules qui comprend un système de mesure et un système photographique couplés l'un à l'autre, avec les étapes préalables suivantes :

/1/ caractériser une relation d'imagerie associant un point dans chaque image qui est saisie par le système photographique de l'appareil, à chaque point qui est situé à l'intérieur d'un champ d'entrée de ce système photographique, et

/2/ déterminer une valeur d'un angle de montage de l'appareil de contrôle de véhicules, entre un axe optique du système photographique et une direction radiale de mesure à distance du système de mesure.

Le procédé comprend en outre les étapes suivantes :

/3/ disposer l'appareil de contrôle de véhicules sur un abord de la route,

/4/ saisir au moins une image de la route avec le système photographique de l'appareil de contrôle de véhicules,

/5/ déterminer au moins un point de fuite («vanishing point» en anglais) dans l'image saisie à l'étape /4/, à partir d'au moins deux lignes de fuite («vanishing line») qui sont repérées dans cette image,

/6/ déterminer une valeur d'un angle de visée optique, entre la route et l'axe optique du système photographique, à partir d'au moins une coordonnée de chaque point de fuite déterminé à l'étape /5/ et de la relation d'imagerie caractérisée à l'étape /1/, et

/7/ déterminer une valeur d'une déviation angulaire de mesure, entre la route et la direction radiale de mesure à distance du système de mesure, à partir de la valeur de l'angle de visée optique déterminée à l'étape /6/ et de la valeur de l'angle de montage déterminée à l'étape /2/.

Ainsi, dans un procédé d'installation selon l'invention, la déviation angulaire de mesure est déduite d'une mesure de l'angle de visée optique, cette mesure étant effectuée à partir d'une image qui est saisie par le système photographique de l'appareil. Aucune mesure de distance ni aucun déplacement d'un opérateur le long de la route n'est donc nécessaire, de sorte que l'installation de l'appareil pour une nouvelle session de contrôle routier est grandement simplifiée. En particulier, aucun jalon n'est à placer à une distance de retrait qui doit être mesurée précisément à partir du bord de la route. L'installation de l'appareil de contrôle de véhicules est donc beaucoup plus rapide, et peut être effectuée par un nombre réduit d'opérateurs. Un tel procédé est particulièrement adapté pour un appareil de contrôle de véhicules qui est du type appareil mobile de contrôle routier, puisque la déviation angulaire de mesure est différente dans ce cas à chaque nouvelle session de contrôle routier.

En outre, l'image de laquelle est déduite la valeur de l'angle de visée optique peut être conservée très simplement dans le dossier de chaque véhicule contrôlé. Les lignes de fuite et le (les) point(s) de fuite qui ont été utilisés pour déterminer cet angle de visée peuvent alors être vérifiés à tout moment ultérieurement, notamment lors du traitement administratif ou juridique du dossier.

Par ailleurs, les lignes de fuite peuvent être déterminées de multiples façons dans la (les) image(s) qui est (sont) saisie(s). Par exemple, les deux bords opposés de la route, les deux lignes de rive de la route si elles sont marquées sur son revêtement, et/ou la ligne de marquage central de la route, peuvent être utilisés pour déterminer les lignes de fuite de chaque image saisie. La direction de chaque bord de route, de chaque ligne de rive ou de la ligne de marquage central peut notamment être déterminée en superposant, dans l'image qui a été saisie, un segment rectiligne à ce bord de route, cette ligne de rive ou la ligne de marquage central. Une telle superposition est réalisée globalement, d'une façon moyenne, si bien qu'elle n'est pas gênée par des irrégularités locales du bord de la route ou de la ligne de marquage correspondante. La direction de chaque bord de route ou ligne de marquage dans l'image peut ainsi être déterminée avec précision. Le point de fuite qui en résulte, ainsi que l'angle de visée optique et par suite l'angle de visée radioélectrique, sont donc aussi déterminés avec une précision supérieure.

De plus, un tel procédé qui est basé sur un traitement d'image peut être exécuté automatiquement, notamment par une unité de traitement informatique, d'une façon qui est rapide et simple pour l'opérateur en charge du contrôle routier.

En particulier, l'appareil de contrôle de véhicules peut être du type appareil de contrôle des vitesses des véhicules qui circulent sur la route. Dans ce cas, le système de mesure peut comprendre un système de mesure de vitesse par effet Doppler. Un axe radioélectrique de ce système de mesure de vitesse par effet Doppler forme alors la direction radiale de mesure à distance.

L'invention propose aussi un programme d'ordinateur, qui est destiné à être stocké dans une mémoire d'une unité de traitement informatique, sur un support de mémoire amovible ou sur un support de lecture informatique, et qui comporte des instructions pour exécuter les étapes /5/ à /7/ d'un procédé conforme à l'invention, tel que décrit précédemment. Un tel programme doit être considéré comme un produit dans le cadre de la protection qui est recherchée par la présente demande de brevet,

Enfin, l'invention propose encore un ensemble de contrôle de véhicules, qui comprend l'appareil de contrôle des véhicules et une unité de traitement informatique, cette dernière comportant une mémoire ou un support de lecture informatique adapté pour stocker les instructions du programme d'ordinateur précédent.

D'autres particularités et avantages de la présente invention apparaîtront dans la description ci-après d'exemples de mise en oeuvre non limitatifs, en référence aux dessins annexés, dans lesquels :

- la figure 1, déjà décrite, est un schéma en vue de haut illustrant un procédé connu d'installation d'un appareil de contrôle de vitesses de véhicules ;

- la figure 2 représente un appareil de contrôle de vitesse qui peut être utilisé pour mettre en oeuvre l'invention ;

- les figures 3a et 3b illustrent deux contributions à une relation d'imagerie, respectivement une projection centrale et une distorsion optique ;

- les figures 4a-4d montrent plusieurs types de lignes de fuite qui peuvent être utilisées dans des mises en oeuvre différentes de l'invention ; et

- la figure 5 est un schéma en vue de haut illustrant une mise en oeuvre d'un procédé d'installation selon l'invention, pour l'appareil de contrôle de vitesse de la figure 2.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

A titre d'illustration, l'invention est maintenant décrite en détail dans le cas particulier d'un appareil de contrôle de vitesses de véhicules. Toutefois, il est entendu qu'elle peut être appliquée à d'autres types d'appareils de contrôle routier, tels que des appareils de contrôle de la distance de séparation entre deux véhicules, ou encore des appareils de lecture des plaques d'immatriculation de véhicules.

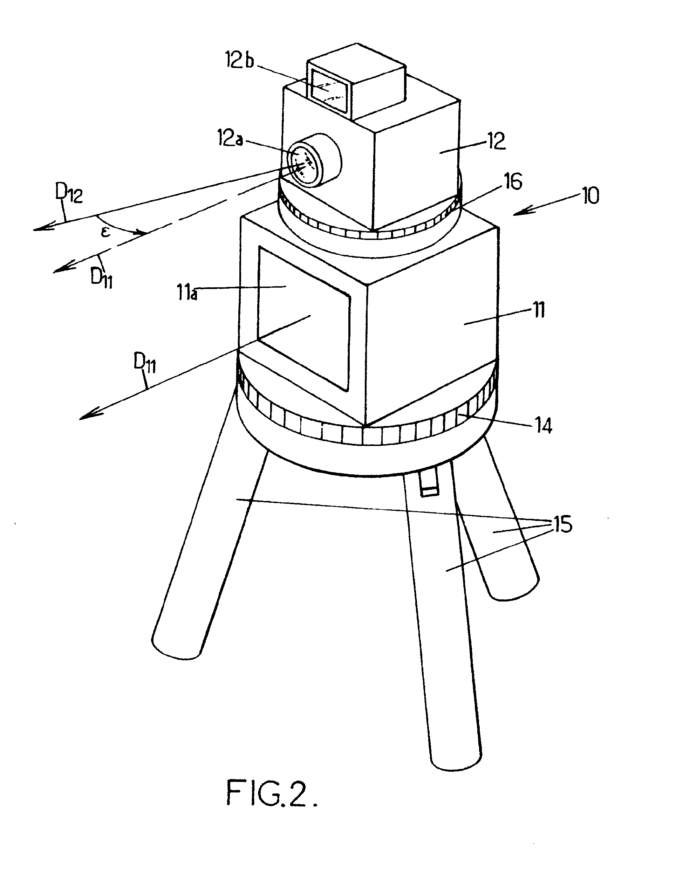

Conformément à la figure 2, un appareil de contrôle de vitesses de véhicules qui est désigné globalement par la référence 10, comprend un système de mesure de vitesse à effet Doppler 11 et un système photographique 12. Les systèmes 11 et 12 peuvent être superposés avec une orientation relative qui est fixée initialement. Ils sont montés ensemble sur un support qui peut être un socle lorsqu'il s'agit d'un appareil fixe de contrôle routier, ou un trépied 15 lorsqu'il s'agit d'un appareil mobile de contrôle routier. L'appareil 10 peut comprendre en outre une platine de rotation 14, qui est disposée entre son support d'une part et les systèmes 11 et 12 d'autre part. La platine 14 permet de tourner ensemble les systèmes 11 et 12 autour d'un axe vertical, pour modifier une orientation angulaire de ceux-ci repérée dans un plan horizontal. Elle peut être motorisée ou à actionnement manuel.

Le système de mesure de vitesse 11 par effet Doppler, ou radar, possède une fenêtre d'émission-réception 11a, qui est traversée par le rayonnement utilisé pour effectuer la mesure de vitesse. $D_{11}$ désigne l'axe radioélectrique du radar 11, qui constitue la direction radiale de mesure à distance. Selon le principe connu d'un système de mesure de vitesse par effet Doppler, le radar 11 mesure la composante de la vitesse de déplacement d'un véhicule qui est parallèle à l'axe radioélectrique $D_{11}$, aussi appelée composante radiale de la vitesse. La composante de cette vitesse qui est perpendiculaire à l'axe radioélectrique $D_{11}$ n'est pas mesurée. L'axe radioélectrique $D_{11}$ est fixe par rapport au boîtier du radar 11, lorsque ce boîtier est tourné d'une façon quelconque. Le radar 11 peut être adapté pour mesurer la vitesse d'un véhicule qui s'éloigne ou qui se rapproche de l'appareil 10. De plus, le fonctionnement du radar 11 est déclenché automatiquement lorsqu'un véhicule qui passe devant l'appareil 10 est détecté.

Le système photographique 12 peut être un appareil photographique standard qui comporte un objectif 12a et un dispositif d'illumination 12b. Le dispositif 12b peut être un flash, ou tout autre dispositif d'illumination, notamment à illumination continue. $D_{12}$ désigne l'axe optique du système photographique 12. Plus précisément, $D_{12}$ est l'axe optique de l'objectif 12a, qui passe en général par un centre géométrique de chaque image qui est saisie par le système 12. L'axe optique $D_{12}$ est fixe par rapport à un boîtier du système 12, quelques soient les mouvements qui sont appliqués à ce dernier boîtier. Le fonctionnement du système photographique 12 est synchronisé avec celui du radar 11.

L'axe radioélectrique $D_{11}$ du radar 11 et l'axe optique $D_{12}$ du système photographique 12 sont fixes l'un par rapport à l'autre pendant une période d'utilisation de l'appareil 10. Ils forment un angle de montage qui est noté $\varepsilon$, et qui est une mesure du défaut de parallélisme entre les axes $D_{11}$ et $D_{12}$ dans un plan horizontal. Le parallélisme des axes $D_{11}$ et $D_{12}$ est ajusté en usine lors de l'assemblage de l'appareil 10, et l'angle de montage $\varepsilon$ est mesuré initialement puis périodiquement lors de séances de maintenance de l'appareil 10. Eventuellement, une platine intermédiaire de rotation 16 peut être disposée entre les systèmes 11 et 12 de l'appareil 10, pour permettre d'ajuster plus facilement le parallélisme des axes $D_{11}$ et $D_{12}$. L'homme du métier connaît plusieurs méthodes pour mesurer l'angle de montage $\varepsilon$. Dans toute la présente description de l'invention, la valeur de l'angle de montage $\varepsilon$ est fixe et supposée avoir été déterminée selon l'une de ces méthodes.

De façon connue, le système photographique 12 produit une relation d'imagerie qui associe un point quelconque à l'intérieur d'un champ d'entrée de ce système photographique avec un point dans chaque image qui est saisie par ce même système. En fait, cette relation d'imagerie constitue une projection de la partie d'espace qui est située devant le système photographique 12, à l'intérieur de son champ d'entrée, dans le plan de l'image qui est formée par l'objectif 12a et qui est saisie.

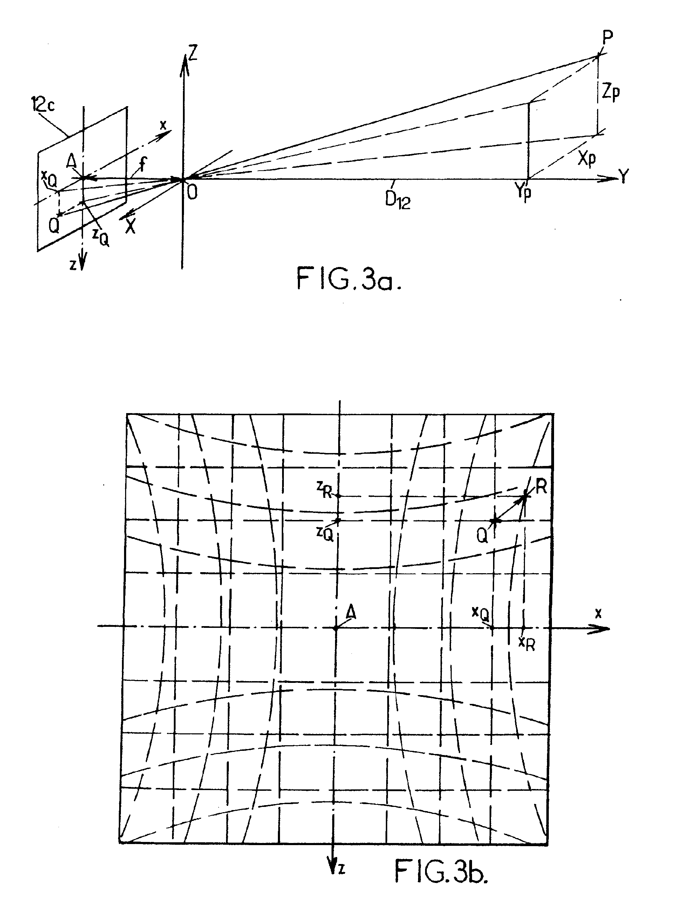

Le premier ordre de cette relation d'imagerie est une projection centrale, aussi appelée projection sténopéïque («pinhole projection» en anglais), telle qu'illustrée par la figure 3a. Sur cette figure, les axes X, Y et Z indiquent les coordonnées d'un point quelconque P qui est situé dans le champ d'entrée du système photographique 12. L'axe Y est superposé à l'axe optique $D_{12}$. La référence 12c désigne le plan de l'image qui est saisie, et les axes x et z indiquent les coordonnées d'un point Q dans cette image. Le point Q est associé au point P par la projection centrale de pôle O. Ainsi, le point Q est l'intersection de la droite qui passe par le point P et par le pôle O, avec le plan d'image 12c. La distance de séparation entre le pôle O et le plan d'image 12c est la distance focale de l'objectif 12a, qui est notée f. Les axes x et z peuvent être choisis parallèles aux axes X et Z, respectivement, en étant orientés de façon opposée par rapport à ces derniers. Une caractérisation de la relation d'imagerie du système photographique 12 peut alors comprendre d'abord les deux sous-étapes suivantes :

/1-1/ déterminer un point central A de chaque image, qui correspond à l'axe optique $D_{12}$ du système photographique 12 ; et

/1-2/ caractériser une relation de projection centrale qui relie les coordonnées du point P situé à l'intérieur du champ d'entrée du système photographique 12 avec les coordonnées du point Q dans l'image, la projection centrale associant un point quelconque de l'axe optique $D_{12}$ du système photographique 12 au point central A.

Le point Q est appelé point intermédiaire. Par exemple, les coordonnées $x_Q$ et $z_Q$ du point intermédiaire Q, respectivement selon les axes x et z du plan d'image 12c, peuvent être déterminées par la relation matricielle suivante, à partir des coordonnées X, Y et Z du point P :

$$\begin{pmatrix} x_Q \\ z_Q \end{pmatrix} = \begin{pmatrix} f & 0 \\ 0 & f \end{pmatrix} \begin{pmatrix} X_P/Y_P \\ Z_P/Y_P \end{pmatrix} \qquad (1)$$

Dans ce cas, le point A est pris pour origine des axes x et z dans la plan d'image 12c.

En fait, le point intermédiaire Q ne correspond pas à l'image du point P qui est formée par le système photographique 12, à cause d'une distorsion optique qui est produite par l'objectif 12a, en plus de la projection centrale. Une telle distorsion est bien connue, et correspond à un décalage de l'image du point P par rapport au point intermédiaire Q, à l'intérieur du plan d'image 12c. La caractérisation de la relation d'imagerie du système photographique 12 comprend alors en outre la sous-étape supplémentaire suivante :

/1-3/ caractériser la distorsion optique du système photographique 12, de sorte que la relation d'imagerie résulte de la projection centrale caractérisée à la sous-étape /1-2/, suivie d'une application de cette distorsion optique.

On note R l'image du point P qui est formée par le système photographique 12, avec ses coordonnées $x_R$ et $z_R$ qui sont mesurées dans le plan d'image 12c, respectivement selon les axes x et z. La distorsion optique du système 12 peut alors être déterminée sous forme polynomiale par les relations suivantes, qui expriment les coordonnées du point R à partir des coordonnées $x_Q$ et $z_Q$ du point intermédiaire Q :

$$x_R = x_Q \cdot \left(1 + k_1 \cdot r_Q^2 + k_2 \cdot r_Q^4\right) + 2 \cdot p_1 \cdot x_Q \cdot z_Q + p_2 \cdot \left(r_Q^2 + 2 \cdot x_Q^2\right) \qquad (2a)$$

$$z_R = z_Q \cdot \left(1 + k_1 \cdot r_Q^2 + k_2 \cdot r_Q^4\right) + 2 \cdot p_1 \cdot x_Q \cdot z_Q + p_2 \cdot \left(r_Q^2 + 2 \cdot z_Q^2\right) \qquad (2b)$$

Dans ces relations, les paramètres $k_1$, $k_2$, $p_1$ et $p_2$ caractérisent l'amplitude de la distorsion du système 12. $r_Q$ désigne la distance entre les points A et Q à l'intérieur du plan d'image 12c : $r_Q = (x_Q^2 + z_Q^2)^{1/2}$. La figure 3b représente le plan d'image 12c avec deux trames en traits interrompus : une trame rectiligne à motif carré et une trame à lignes courbes qui correspond à la précédente lorsque la distorsion du système photographique 12 est appliquée. Autrement dit, la trame courbe est obtenue en appliquant les relations 2a et 2b aux points de la trame rectiligne. Les points Q et R qui sont indiqués appartiennent respectivement à la trame rectiligne et à la trame courbe.

D'autres méthodes que celle qui vient d'être décrite, et qui lui sont équivalentes, peuvent être utilisées alternativement pour déterminer et caractériser la relation d'imagerie qui est produite par le système photographique 12. En particulier, la relation d'imagerie peut être caractérisée à partir d'au moins une image d'une mire d'étalonnage, qui est saisie par le système photographique 12. Les coordonnées $x_R$ et $z_R$ du point d'image R peuvent aussi être lues ou interpolées à partir d'une table de lecture («lookup table») enregistrée, dont les entrées peuvent être les coordonnées $x_Q$ et $z_Q$ du point intermédiaire Q. Alternativement encore, la relation d'imagerie peut être caractérisée par des équations qui expriment directement les coordonnées $x_R$ et $z_R$ du point d'image R, dans le plan d'image 12c, en fonction des coordonnées $X_P$, $Y_P$ et $Z_P$ du point P du champ d'entrée.

De même que la détermination de la valeur de l'angle de montage ε, la caractérisation de la relation d'imagerie du système photographique 12 peut être réalisée dans une usine de production ou dans un centre technique de maintenance de l'appareil de contrôle de vitesse 10.

L'invention est basée sur l'identification de lignes de fuite dans une image qui est saisie après que l'appareil de contrôle de vitesse 10 a été installé sur un abord de la route 1. Ces lignes de fuite correspondent à des lignes qui sont rectilignes et parallèles dans la scène réelle qui a été photographiée. Au moins deux lignes de fuite sont ainsi identifiées. Eventuellement, plusieurs groupes de lignes de fuite sont identifiés, correspondant chacun à des lignes dans la scène photographiée qui sont réellement rectilignes et parallèles entre elles à l'intérieur d'un même groupe, mais qui sont orientées différemment d'un groupe à l'autre. Pour augmenter la précision avec laquelle chaque point de fuite est déterminé, chaque groupe de lignes de fuite peut comprendre plus de deux lignes.

Il est possible d'identifier les lignes de fuite directement dans l'image qui est saisie par le système photographique 12. Dans ce cas, les lignes de fuite sont en général courbes, à cause des distorsions optiques du système 12, même si les lignes auxquelles elles correspondent dans la scène photographiée sont rectilignes. Par exemple, des tracés de lignes de fuite qui sont courbes peuvent être superposés respectivement aux images des bords $B_2$ et $B_3$ d'un segment rectiligne de la route 1, ainsi qu'à l'image de la ligne de marquage central $B_1$ de la route 1. Ces lignes de fuite doivent avoir des courbures régulières, ou des variations de courbures qui sont régulières, pour converger vers un point de fuite unique qui peut être déterminé avec précision.

De préférence, les lignes de fuite sont identifiées dans l'image après que l'image a été traitée pour supprimer la distorsion optique du système photographique 12. Des lignes qui sont rectilignes dans la scène réelle photographiée sont alors reproduites en lignes qui sont aussi rectilignes dans l'image qui a été saisie puis corrigée de la distorsion optique. Il est alors plus facile de superposer avec précision des tracés de lignes de fuite rectilignes à des lignes ou à des éléments de l'image, même si ces lignes ou éléments de l'image sont interrompus, partiellement masqués ou irréguliers. En effet, le tracé de ligne de fuite rectiligne peut être superposé à une position moyenne d'une ligne de motif qui repérée dans l'image, avec une précision qui est bonne.

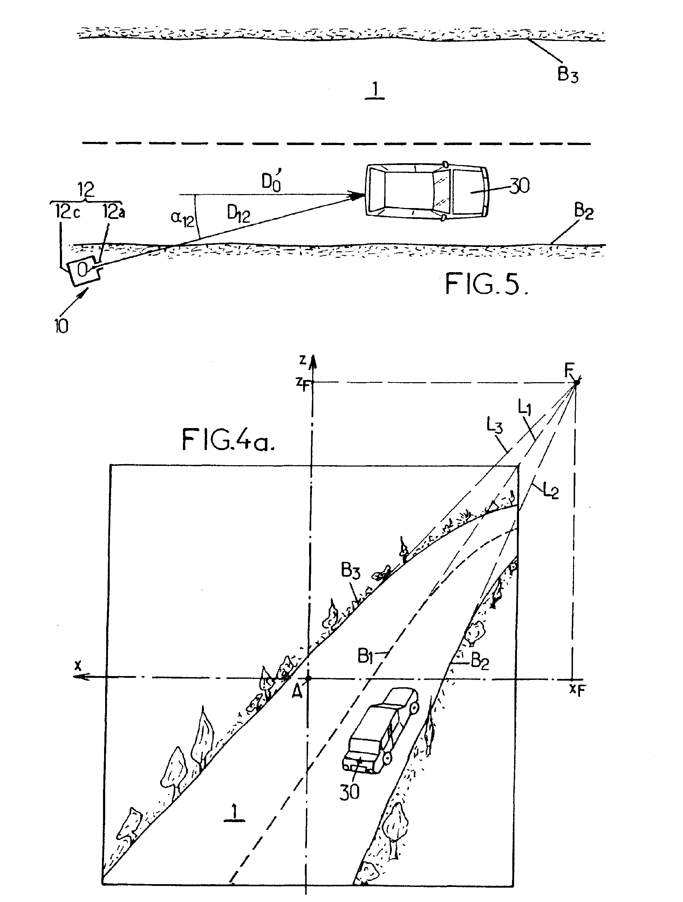

Plusieurs méthodes peuvent être utilisées alternativement pour repérer des lignes de fuite dans l'image qui est saisie. Les suivantes sont citées à titre non limitatif, respectivement en référence aux figures 4a à 4d :

- au moins une des lignes de fuite peut correspondre dans l'image qui est saisie à un segment rectiligne d'une ligne de marquage central, d'un bord ou d'une ligne de rive de la route (figure 4a) : les lignes de fuite $L_1$, $L_2$ et $L_3$ correspondent respectivement à la ligne de marquage central $B_1$ et aux bords $B_2$ et $B_3$ de la route 1 ;

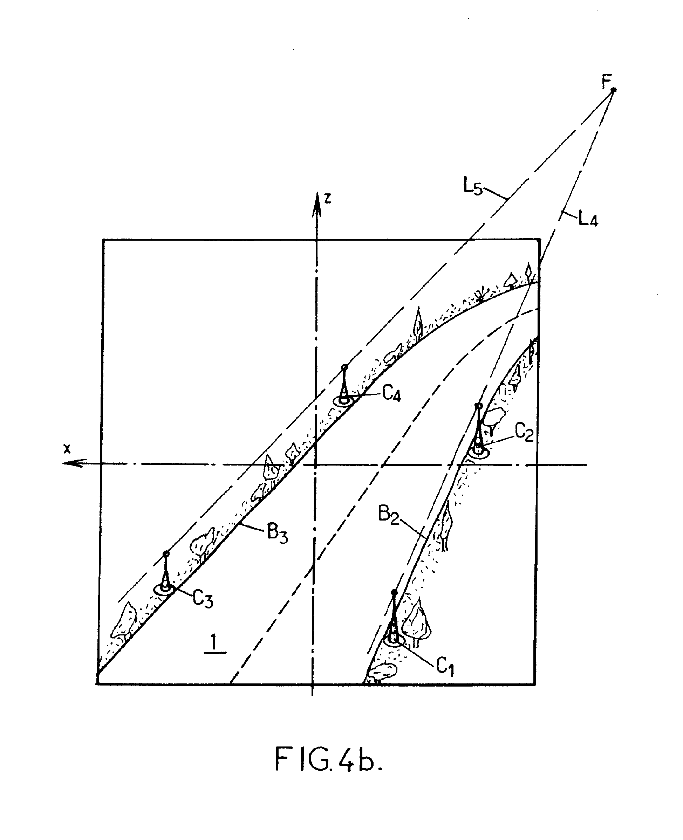

- au moins une des lignes de fuite peut être identifiée par deux jalons qui sont disposés sur un bord d'un segment rectiligne de la route, et qui sont photographiés dans l'image saisie (figure 4b) : la ligne de fuite $L_4$ passe par les pointes de deux bornes $C_1$ et $C_2$ de hauteurs identiques qui sont posées sur le même bord $B_2$ de la route 1, à distance l'une de l'autre, et la ligne de fuite $L_5$ passe par les pointes de deux autres bornes $C_3$ et $C_4$ qui sont posées sur l'autre bord $B_3$ de la route 1. Pour plus de précision, les bornes $C_1$ à $C_4$ peuvent être disposées sur des lignes de rives de la route 1, lorsque de telles lignes sont marquées sur le revêtement de la route. En outre, les jalons peuvent comporter chacun un motif optique qui peut être détecté automatiquement dans l'image qui est saisie ;

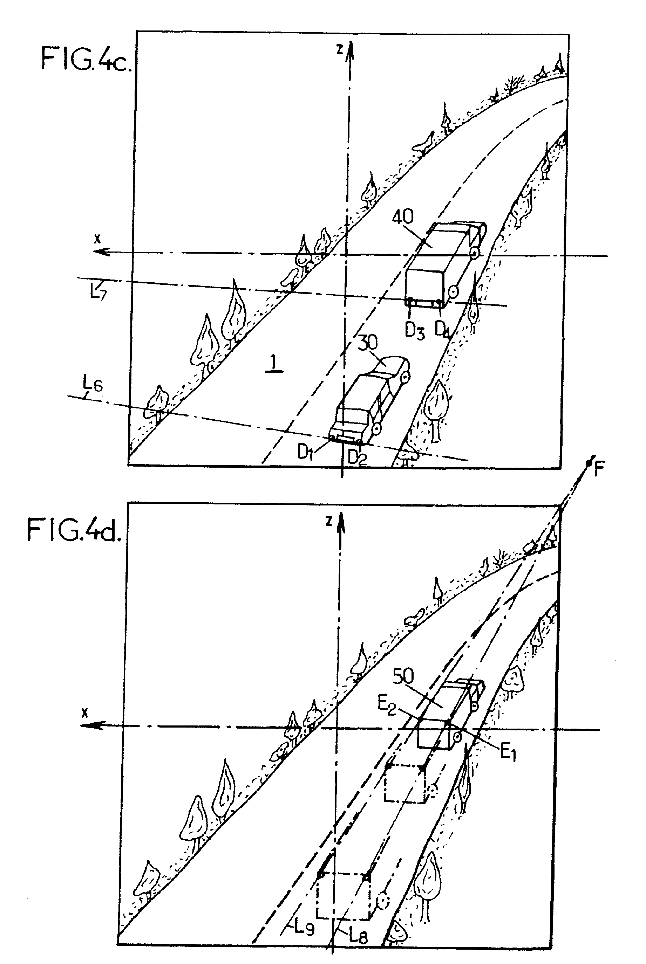

- au moins une des lignes de fuite peut être identifiée à partir de points dans l'image saisie qui correspondent à deux phares d'un véhicule circulant sur la route (figure 4c) : la ligne de fuite $L_6$ passe par les deux phares arrière $D_1$ et $D_2$ de la voiture 30, et la ligne de fuite $L_7$ passe par les deux phares $D_3$ et $D_4$ du camion 40 ; et

- au moins une des lignes de fuite peut être déterminée à partir de positions d'un même point de repère d'un véhicule qui circule sur la route, dans des images différentes qui ont été saisies successivement sans bouger l'appareil de contrôle de vitesse, ces positions étant reportées dans une même de ces images (figure 4d) : les lignes de fuite $L_8$ et $L_9$ passent respectivement par deux angles $E_1$ et $E_2$ du camion 50 qui est photographié à plusieurs instants successifs. Les positions des angles $E_1$ et $E_2$ qui sont indiquées en pointillés correspondent à des images qui ont été saisies juste avant l'image de la figure, et qui ont été reportées dans cette dernière.

Les images qui sont utilisées pour repérer les lignes de fuite peuvent être saisies au début de la session du contrôle routier, avant qu'un véhicule particulier soit contrôlé. Alternativement, les lignes de fuite peuvent être repérées directement dans une image qui est saisie lors du contrôle d'un véhicule.

Les figures 4a à 4d reproduisent symboliquement ces images qui ont été saisies, après que chacune d'elles a été traitée numériquement pour supprimer la distorsion optique du système photographique 12. Autrement dit, chaque point R de l'une de ces images a été déplacé vers la position du point intermédiaire Q tel que le vecteur QR corresponde à la distorsion optique, comme illustré par la figure 3b. Par exemple, la position du point intermédiaire Q peut être déterminée en inversant numériquement les relations 2a et 2b qui ont été données plus haut, pour obtenir les coordonnées $x_Q$ et $z_Q$ en fonction des coordonnées $x_R$ et $z_R$. Les lignes de fuite qui apparaissent dans toutes ces images corrigées de la distorsion optique sont donc rectilignes.

En outre, l'orientation des axes x et z a été redressée sur les figures 4a à 4d par rapport à la figure 3a, pour faciliter la visualisation des images.

Par ailleurs, l'utilisation des lignes de fuite $L_1$ et $L_6$ à $L_9$ permet d'éviter qu'une éventuelle augmentation ou rétrécissement de la largeur de la route 1, dans le segment de celle-ci où est effectué le contrôle routier, ne fausse la détermination de l'orientation de l'appareil 10 par rapport à la direction $D_0'$ de déplacement des véhicules.

Un point de fuite F est alors déterminé à l'intersection des lignes de fuite qui correspondent à des lignes parallèles dans la scène qui est photographiée. Ce point de fuite F est caractérisé par ses coordonnées sur les axes x et z, mesurées à partir du point central A. D'une façon générale, chaque point de fuite F qui est ainsi déterminé dans l'une des images saisies n'est pas nécessairement situé à l'intérieur des limites périphériques de cette image. En effet, la limite d'image est fixée par un diaphragme de champ du système photographique 12, ou par la taille de la matrice de photodétecteurs qui est située dans le plan d'image 12c, sans relation avec la scène qui est photographiée. Eventuellement, plusieurs points de fuite peuvent être déterminés dans une même image, un pour chaque groupe de lignes de fuite qui ont été repérées dans cette image.

La valeur de l'angle de visée optique $\alpha_{12}$, entre l'axe optique $D_{12}$ du système photographique 12 et la direction $D_0'$ de la route 1 (figure 5), peut être déduite des coordonnées de chaque point de fuite F dans l'image corrigée des distorsions optiques. En particulier, lorsque le point de fuite F est déterminé à partir de lignes qui sont parallèles à la route 1 dans la scène photographiée, l'abscisse $x_F$ du point de fuite F est :

$$x_F = f \cdot \tan(\alpha_{12}) \qquad\qquad (3a)$$

où f désigne encore la distance focale de l'objectif 12a et tan désigne la fonction trigonométrique de tangente. L'angle de visée optique $\alpha_{12}$ peut donc être calculé selon la formule suivante :

$$\alpha_{12} = \text{Arctan}(x_F / f) \qquad\qquad (3b)$$

Arctan désignant l'inverse de la fonction tangente. Toutefois, l'angle de visée optique $\alpha_{12}$ est égal à la valeur complémentaire de Arctan($x_F$ / f) lorsque le point de fuite est issu d'un groupe de lignes de fuite correspondant à une direction dans la scène photographiée qui est perpendiculaire à la route 1 (figure 4c). La cote du point de fuite F, selon l'axe z, dépend de l'inclinaison de l'appareil de contrôle 10 par rapport à un plan horizontal, et d'une éventuelle pente de la route 1.

La valeur de l'angle de visée radioélectrique $\alpha_{11}$, ou de façon générale la valeur de la déviation angulaire de mesure $\alpha_{11}$, est alors :

$$\alpha_{11} = \alpha_{12} + \varepsilon \qquad\qquad (4)$$

lorsque l'angle de montage $\varepsilon$ est compté à partir de l'axe optique $D_{12}$ du système photographique 12 jusqu'à l'axe radioélectrique $D_{11}$ du radar 11, ce dernier formant la direction radiale de mesure à distance.

Lorsqu'une valeur-cible $\alpha_{11\text{-cible}}$ est disponible pour la déviation angulaire de mesure $\alpha_{11}$, c'est-à-dire pour l'angle de visée radioélectrique dans le cas d'un appareil de contrôle de vitesse, un procédé selon l'invention peut comprendre en outre les étapes suivantes :

- calculer une erreur $\Delta\alpha$ entre la valeur de la déviation angulaire de mesure $\alpha_{11}$ qui a été déterminée et la valeur-cible :

$$\Delta\alpha = \left| \alpha_{11} - \alpha_{11\text{-cible}} \right| \; ;$$

et
- éventuellement produire un signal d'alarme si l'erreur $\Delta\alpha$ est supérieure à une valeur d'erreur fixée.

En particulier, la valeur-cible $\alpha_{11}$-cible peut être fournie par le fabricant de l'appareil de contrôle 10.

L'appareil de contrôle de véhicules 10 peut alors être tourné pour réduire l'erreur $\Delta\alpha$, par exemple en actionnant la platine de rotation 14.

La vitesse du véhicule 30 qui circule sur la route 1 peut alors être mesurée en utilisant le radar 11. La valeur qui a été déterminée pour la déviation angulaire de mesure $\alpha_{11}$ est alors utilisée pour obtenir le résultat de la mesure de vitesse, selon la formule suivante :

$$\text{vitesse réelle} = \text{vitesse brute} / \cos(\alpha_{11}) \qquad\qquad (5)$$

où la vitesse brute est la vitesse de rapprochement ou d'éloignement du véhicule 30 selon l'axe radioélectrique $D_{11}$, la vitesse réelle est celle du véhicule 30 selon la direction $D_0$', et cos désigne la fonction trigonométrique du cosinus. Pour cela, la valeur de la déviation angulaire de mesure $\alpha_{11}$ est transmise au système de mesure de vitesse 11 d'une façon qui connue, et qui peut être automatisée.

Pour un autre appareil de contrôle routier auquel est appliqué l'invention, lorsqu'une mesure est effectuée avec l'appareil pour un véhicule qui circule sur la route, la valeur de la déviation angulaire de mesure $\alpha_{11}$ qui a été déterminée préalablement est utilisée pour obtenir le résultat de la mesure pour ce véhicule.

L'invention peut être mise en oeuvre d'une façon informatisée, pour en permettre des utilisations encore plus simples et plus rapides par l'opérateur du contrôle routier. Pour cela, un ensemble de contrôle de véhicules peut comprendre un appareil de contrôle tel que décrit jusqu'à présent, et une unité de traitement informatique qui comporte une mémoire ou un support de lecture informatique adapté pour stocker des instructions d'un programme d'ordinateur. Ce programme comporte notamment des instructions pour déterminer au moins un point de fuite dans une image qui a été saisie, à partir de plusieurs lignes de fuite qui sont repérées dans cette image, puis pour calculer l'angle de visée optique $\alpha_{12}$ et la déviation angulaire de mesure $\alpha_{11}$.

**EP 2 476 094 B1**

Dans des perfectionnements d'une telle mise en oeuvre informatisée de l'invention, le programme peut comporter en outre des instructions pour :

- mémoriser une caractérisation de la relation d'imagerie, par exemple selon un calcul suppression de distorsion optique qui est conforme aux relations 1 et 2a-2b, respectivement ;

- mémoriser la valeur de l'angle de montage $\varepsilon$ ;

- recevoir en entrée des caractérisations respectives d'au moins deux lignes de fuite dans au moins une image saisie ; et

- éventuellement, calculer l'erreur $\Delta\alpha$.

L'entrée des caractérisations des lignes de fuite peut être effectuée de façon précise et conviviale lorsque l'image est affichée sur un écran. Le programme peut alors comporter des séquences pour assister l'opérateur dans l'identification des lignes de fuite à l'intérieur de l'image saisie. Par exemple, un tracé de ligne de fuite peut être superposé à l'image, que l'opérateur peut modifier, déplacer et orienter différemment dans l'image pour l'amener en coïncidence avec à des éléments reproduits dans l'image, qu'il choisit. Il valide alors le tracé qui coïncide avec ces éléments d'image choisis et peut recommencer l'opération pour une autre ligne de fuite.

Alternativement, le programme peut être adapté pour effectuer une analyse d'image avec reconnaissance de formes, et déterminer de façon autonome les lignes de fuite et les points de fuite. Lorsque les lignes de fuite sont déduites d'une comparaison de plusieurs images entre lesquelles un même véhicule se déplace (figure 4d), le programme peut effectuer lui-même la comparaison d'images et déterminer les lignes de fuite à partir des positions successives du véhicule dans les images saisies.

Par ailleurs, lorsque le programme permet de calculer automatiquement l'erreur $\Delta\alpha$, l'ensemble de contrôle de véhicules peut comprendre en outre un système d'alarme qui est connecté pour être activé par l'unité de traitement informatique lors d'une exécution des instructions du programme, si l'erreur $\Delta\alpha$ est supérieure à la valeur d'erreur fixée.

L'ensemble de contrôle de véhicules peut comprendre en outre un système de commande de la platine 14, qui est adapté pour commander une rotation de cette platine en fonction de l'erreur $\Delta\alpha$. L'installation de l'appareil de contrôle de véhicules 10, dans une disposition qui est appropriée pour contrôler des véhicules qui passent sur la route 1, peut alors être très rapide, voire être entièrement automatisée en ne nécessitant aucune intervention de l'opérateur du contrôle routier.

Il est entendu que des modifications peuvent être introduites par rapport aux modes de mise en oeuvre de l'invention qui ont été décrits en détail ci-dessus. En particulier, la relation d'imagerie peut être caractérisée de multiples façons, qui sont équivalentes dans le but de supprimer la distorsion optique du système photographique qui est utilisé. De même, les points de fuite dans l'image qui est saisie peuvent aussi être identifiés de différentes manières, qui sont aussi équivalentes entre elles.

Enfin, il est rappelé que l'invention n'est pas limitée à un contrôle des vitesses de véhicules, mais qu'elle peut être appliquée à tout appareil de contrôle routier, pour lequel l'angle entre la route et la direction radiale de mesure à distance doit être déterminé.

## Revendications

1. Procédé d'installation d'un appareil de contrôle de véhicules (30) circulant sur une route (1), ledit appareil (10) comprenant un système de mesure (11) et un système photographique (12) couplés l'un à l'autre, le procédé comprenant les étapes préalables suivantes :

   /1/ caractériser une relation d'imagerie associant un point (R) dans chaque image saisie par le système photographique (12) à chaque point (P) situé à l'intérieur d'un champ d'entrée dudit système photographique, et
   /2/ déterminer une valeur d'un angle de montage ($\varepsilon$) de l'appareil de contrôle de véhicules (10), entre un axe optique ($D_{12}$) du système photographique (12) et une direction radiale de mesure à distance ($D_{11}$) du système de mesure (11),
   le procédé comprenant en outre les étapes suivantes :
   /3/ disposer l'appareil de contrôle de véhicules (10) sur un abord ($B_2$) de la route (1),
   /4/ saisir au moins une image de la route avec le système photographique (12) de l'appareil de contrôle de véhicules (10),
   /5/ déterminer au moins un point de fuite (F) dans l'image saisie à l'étape /4/, à partir d'au moins deux lignes

de fuite ($L_1$-$L_9$) repérées dans ladite image,
/6/ déterminer une valeur d'un angle de visée optique ($\alpha_{12}$), entre la route (1) et l'axe optique ($D_{12}$) du système photographique (12), à partir d'au moins une coordonnée de chaque point de fuite (F) déterminé à l'étape /5/ et de la relation d'imagerie caractérisée à l'étape /1/, et
/7/ déterminer une valeur d'une déviation angulaire de mesure ($\alpha_{11}$), entre la route (1) et la direction radiale de mesure à distance ($D_{11}$) du système de mesure (11), à partir de la valeur de l'angle de visée optique ($\alpha_{12}$) déterminée à l'étape /6/ et de la valeur de l'angle de montage ($\varepsilon$) déterminée à l'étape /2/.

2. Procédé selon la revendication 1, dans lequel l'étape /1/ comprend les sous-étapes suivantes :

   /1-1/ déterminer un point central (A) de chaque image correspondant à l'axe optique ($D_{12}$) du système photographique (12) ;
   /1-2/ caractériser une relation de projection centrale reliant des coordonnées du point (P) situé à l'intérieur du champ d'entrée du système photographique (12) avec des coordonnées d'un point intermédiaire (Q) dans chaque image saisie, ladite projection centrale associant un point quelconque de l'axe optique ($D_{12}$) du système photographique (12) au point central (A) déterminé à la sous-étape /1-1/ ; et
   /1-3/ caractériser une distorsion optique du système photographique (12), de sorte que la relation d'imagerie caractérisée à l'étape /1/ résulte de la projection centrale caractérisée à la sous-étape /1-2/, suivie d'une application de ladite distorsion optique.

3. Procédé selon la revendication 1 ou 2, comprenant en outre :

   /8/ calculer une erreur entre la valeur de la déviation angulaire de mesure ($\alpha_{11}$) déterminée à l'étape /7/ et une valeur-cible pour ladite déviation angulaire de mesure ; et
   /9/ éventuellement produire un signal d'alarme si l'erreur est supérieure à une valeur d'erreur fixée.

4. Procédé selon la revendication 3, comprenant en outre :

   /10/ tourner l'appareil de contrôle de vehicules (10) pour réduire l'erreur entre la valeur de la déviation angulaire de mesure ($\alpha_{11}$) et la valeur-cible pour ladite déviation angulaire de mesure.

5. Procédé selon l'une quelconque des revendications précédentes, comprenant en outre une étape de mesure effectuée pour un véhicule (30) circulant sur la route (1), la valeur de la déviation angulaire de mesure ($\alpha_{11}$) déterminée à l'étape /7/ étant utilisée pour obtenir un résultat de mesure pour ledit véhicule.

6. Procédé selon l'une quelconque des revendications précédentes, dans lequel les étapes préalables /1/ et /2/ sont réalisées dans une usine de production ou dans un centre technique de maintenance de l'appareil de contrôle de véhicules (10).

7. Procédé selon la revendication 6, dans lequel la relation d'imagerie est caractérisée à l'étape /1/ à partir d'au moins une image d'une mire d'étalonnage, ladite image étant saisie par le système photographique (12) de l'appareil de contrôle de véhicules (10).

8. Procédé selon l'une quelconque des revendications précédentes, dans lequel l'appareil de contrôle de véhicules (10) est du type appareil mobile de contrôle routier.

9. Procédé selon l'une quelconque des revendications précédentes, dans lequel au moins une ligne de fuite ($L_1$-$L_3$) repérée à l'étape /5/ correspond dans l'image saisie à un segment rectiligne d'une ligne de marquage central ($B_{11}$), d'un bord ($B_2$, $B_3$) ou d'une ligne de rive de la route (1).

10. Procédé selon l'une quelconque des revendications précédentes, dans lequel au moins une ligne de fuite ($L_4$, $L_5$) repérée à l'étape /5/ est identifiée par deux jalons ($C_1$-$C_4$) disposés sur un bord d'un segment rectiligne de la route (1).

11. Procédé selon l'une quelconque des revendications précédentes, dans lequel au moins une ligne de fuite ($L_6$, $L_7$) repérée à l'étape /5/ est identifiée à partir de points ($D_1$-$D_4$) dans l'image saisie correspondant à deux phares d'un véhicule (30, 40) circulant sur la route (1).

12. Procédé selon l'une quelconque des revendications précédentes, dans lequel au moins une ligne de fuite ($L_8$, $L_9$)

repérée à l'étape /5/ est déterminée à partir de positions d'un même point de repère ($E_1$, $E_2$) d'un véhicule (50) circulant sur la route (1) dans des images différentes saisies successivement sans bouger l'appareil de contrôle de véhicules (10), les dites positions étant reportées dans une même des dites images.

13. Procédé selon l'une quelconque des revendications précédentes, dans lequel l'appareil de contrôle de véhicules (10) est du type appareil de contrôle de vitesses des véhicules (30) circulant sur la route (1), le système de mesure (11) comprenant un système de mesure de vitesse par effet Doppler, et un axe radioélectique dudit système de mesure de vitesse par effet Doppler formant la direction radiale de mesure à distance ($D_{11}$).

14. Produit programme d'ordinateur, destiné à être stocké dans une mémoire d'une unité de traitement informatique, sur un support de mémoire amovible ou sur un support de lecture informatique, **caractérisé en ce qu'**il comporte des instructions pour exécuter les étapes /5/ à /7/ d'un procédé selon l'une quelconque des revendications précédentes.

15. Produit programme d'ordinateur selon la revendication 14, **caractérisé en ce qu'**il comporte en outre des instructions pour :

   - mémoriser une caractérisation de la relation d'imagerie ;
   - mémoriser la valeur de l'angle de montage ($\varepsilon$) de l'appareil de contrôle de véhicules (10), entre l'axe optique ($D_{12}$) du système photographique (12) et la direction radiale de mesure à distance ($D_{11}$) du système de mesure (11) ; et
   - recevoir en entrée des caractérisations respectives d'au moins deux lignes de fuite ($L_1$-$L_9$) dans au moins une image saisie.

16. Produit programme d'ordinateur selon la revendication 14 ou 15, **caractérisé en ce qu'**il comporte en outre des instructions pour calculer une erreur entre la valeur de la déviation angulaire de mesure ($\alpha_{11}$) et une valeur-cible pour ladite déviation angulaire de mesure.

17. Ensemble de contrôle de véhicules comprenant un appareil de contrôle des véhicules (10), comprenant lui-même un système de mesure (11) et un système photographique (12) solidaires l'un de l'autre, ledit ensemble étant **caractérisé en ce qu'**il comprend en outre :

   - une unité de traitement informatique comportant une mémoire ou un support de lecture informatique adapté pour stocker les instructions d'un produit programme d'ordinateur selon l'une quelconque des revendications 14 à 16.

18. Ensemble de contrôle de véhicules selon la revendication 17, comprenant en outre un système d'alarme connecté pour être activé par l'unité de traitement informatique lors d'une exécution des instructions du produit programme d'ordinateur, si une erreur entre la valeur de la déviation angulaire de mesure ($\alpha_{11}$) et une valeur-cible pour ladite déviation angulaire de mesure est supérieure à une valeur d'erreur fixée.

19. Ensemble de contrôle de véhicules selon la revendication 17 ou 18, comprenant en outre :

   - une platine de rotation (14) disposée entre un support (15) de l'appareil de contrôle de véhicules (10) et ledit appareil de contrôle de véhicules ; et
   - un système de commande de la platine, adapté pour commander une rotation de ladite platine en fonction d'une erreur entre la valeur de la déviation angulaire de mesure ($\alpha_{11}$) produite par l'unité de traitement informatique et une valeur-cible pour ladite déviation angulaire de mesure.

20. Ensemble de contrôle de véhicules selon l'une quelconque des revendications 17 à 19, dans lequel l'appareil de contrôle des véhicules est du type appareil de contrôle de vitesses des véhicules (30) circulant sur une route (1), le système de mesure (11) comprenant un système de mesure de vitesse par effet Doppler, et un axe radioélectique dudit système de mesure de vitesse par effet Doppler formant la direction radiale de mesure à distance ($D_{11}$).

**Patentansprüche**

1. Verfahren zur Aufstellung eines Geräts zur Überwachung von Fahrzeugen (30), die auf einer Straße (1) fahren, wobei das Fahrzeugüberwachungsgerät (10) ein Messsystem (11) und ein fotografisches System (12) enthält, die miteinander verbunden sind, wobei das Verfahren die folgenden vorhergehenden Schritte enthält:

/1/Charakterisieren einer Abbildungsbeziehung, die einen Punkt (R) in jedem vom fotografischen System (12) erfassten Bild jedem Punkt (P) zuordnet, der sich innerhalb eines Eingangsfelds des fotografischen Systems befindet, und

/2/Bestimmen eines Werts eines Montagewinkels ($\varepsilon$) des Fahrzeugüberwachungsgeräts (10) zwischen einer optischen Achse ($D_{12}$) des fotografischen Systems (12) und einer radialen Fernmessrichtung ($D_{11}$) des Messsystems (11),

wobei das Verfahren außerdem die folgenden Schritte enthält:

/3/Anordnen des Fahrzeugüberwachungsgeräts (10) an einem Rand ($B_2$) der Straße (1),

/4/bestimmten mindestens eines Bilds der Straße mit dem fotografischen System (12) des Fahrzeugüberwachungsgeräts (10),

/5/ Festlegen mindestens eines Fluchtpunkts (F) in dem im Schritt /4/ / erfassten Bild ausgehend von mindestens zwei im Bild ermittelten Fluchtlinien ($L_1$-$L_9$),

/6/Bestimmen eines Werts eines optischen Sichtwinkels ($\alpha_{12}$) zwischen der Straße (1) und der optischen Achse ($D_{12}$) des fotografischen Systems (12) ausgehend von mindestens einer Koordinate jedes im Schritt /5/ bestimmten Fluchtpunkts (F) und der im Schritt /1/ charakterisierten Abbildungsbeziehung, und

/7/ Bestimmen eines Werts einer Messwinkelabweichung ($\alpha_{11}$) zwischen der Straße (1) und der radialen Fernmessrichtung ($D_{11}$) des Messsystems (11) ausgehend von dem im Schritt /6/ bestimmten Wert des optischen Sichtwinkels ($\alpha_{12}$) und von dem im Schritt /2/ bestimmten Wert des Montagewinkels ($\varepsilon$).

2. Verfahren nach Anspruch 1, wobei der Schritt /1/ die folgenden Teilschritte enthält:

/1-1/Bestimmen eines zentralen Punkts (A) jedes Bilds entsprechend der optischen Achse ($D_{12}$) des fotografischen Systems (12);

/1-2/Charakterisieren einer zentralen Projektionsbeziehung, die Koordinaten des im Inneren des Eingangsfelds des fotografischen Systems (12) befindlichen Punkts (P) mit Koordinaten eines Zwischenpunkts (Q) in jedem erfassten Bild verbindet, wobei die zentrale Projektion einen beliebigen Punkt der optischen Achse ($D_{12}$) des fotografischen Systems (12) dem im Teilschritt /1-1/ bestimmten zentralen Punkt (A) zuordnet; und

/1-3/Charakterisieren einer optischen Verzerrung des fotografischen Systems (12) derart, dass die im Schritt /1/ charakterisierte Abbildungsbeziehung aus der im Teilschritt /1-2/ charakterisierten zentralen Projektion resultiert, gefolgt von einer Anwendung der optischen Verzerrung.

3. Verfahren nach Anspruch 1 oder 2, das außerdem enthält:

/8/ Berechnen eines Fehlers zwischen dem im Schritt /7/ bestimmten Wert der Messwinkelabweichung ($\alpha_{11}$) und einem. Zielwert für die Messwinkelabweichung; und

/9/gegebenenfalls Erzeugen eines Alarmsignals, wenn der Fehler über einem festgelegten Fehlerwert liegt.

4. Verfahren nach Anspruch 3, das außerdem enthält:

/10/ Drehen des Fahrzeugüberwachungsgeräts (10), um den Fehler zwischen dem Wert der Messwinkelabweichung ($\alpha_{11}$) und dem Zielwert für die Messwinkelabweichung zu verringern.

5. Verfahren nach einem der vorhergehenden Ansprüche, das außerdem einen Messschritt enthält, der für ein auf der Straße (1) fahrendes Fahrzeug (30) durchgeführt wird, wobei der Wert der im Schritt /7/ bestimmten Messwinkelabweichung ($\alpha_{11}$) verwendet wird, um ein Messergebnis für das Fahrzeug zu erhalten.

6. Verfahren nach einem der vorhergehenden Ansprüche, wobei die vorhergehenden Schritte /1/ und /2/ in einer Produktionsfabrik oder in einem technischen Wartungszentrum des Fahrzeugüberwachungsgeräts (10) durchgeführt werden.

7. Verfahren nach Anspruch 6, wobei die Abbildungsbeziehung im Schritt /1/ ausgehend von mindestens einem Bild eines Eichrasters charakterisiert wird, wobei das Bild vom fotografischen System (12) des Fahrzeugüberwachungsgeräts (10) erfasst wird.

8. Verfahren nach einem der vorhergehenden Ansprüche, wobei das Fahrzeugüberwachungsgerät (10) von der Art mobiles Straßenüberwachungsgerät ist.

9. Verfahren nach einem der vorhergehenden Ansprüche, wobei mindestens eine im Schritt /5/ ermittelte Fluchtlinie ($L_1$-$L_3$) im erfassten Bild einem geradlinigen Segment einer Mittelleitlinie ($B_1$), einem Rand ($B_2$, $B_3$) oder einer Fahrbahnrandlinie der Straße (1) entspricht.

10. Verfahren nach einem der vorergehenden Ansprüche, wobei mindestens eine im Schritt /5/ ermittelte Fluchtlinie ($L_4$, $L_5$) durch zwei Messstangen ($C_1$-$C_4$) ermittelt wird, die an einem Rand eines geradlinigen Segments der Straße (1) angeordnet sind.

11. Verfahren nach einem der vorhergehenden Ansprüche, wobei mindestens eine im Schritt /5/ ermittelte Fluchtlinie ($L_6$, $L_7$) ausgehend von Punkten ($D_1$-$D_4$) im erfassten Bild ermittelt wird, die zwei Scheinwerfern eines auf der Straße (1) fahrenden Fahrzeugs (30, 40) entsprechen.

12. Verfahren nach einem der vorhergehenden Ansprüche, wobei mindestens eine im Schritt /5/ ermittelte Fluchtlinie ($L_8$, $L_9$) ausgehend von Stellungen des gleichen Richtpunkts ($E_1$, $E_2$) eines auf der Straße (1) fahrenden Fahrzeugs (50) in unterschiedlichen Bildern festgelegt wird, die nacheinander ohne Bewegung des Fahrzeugüberwachungsgeräts (10) bestimmt werden, wobei die Stellungen in das gleiche der Bilder übertragen werden.

13. Verfahren nach einem der vorhergehenden Ansprüche, wobei das Fahrzeugüberwachungsgerät (10) von der Art Geschwindigkeitsüberwachungsgerät der auf der Straße (1) fahrenden Fahrzeuge (30) ist, wobei das Messsystem (11) ein System der Geschwindigkeitsmessung durch Doppler-Effekt enthält, und eine Funkachse des Systems zur Geschwindigkeitsmessung durch Doppler-Effekt die radiale Fernmessrichtung ($D_{11}$) formt.

14. Computerprogrammprodukt, das dazu bestimmt ist, in einem Speicher einer Datenverarbeitungseinheit, in einem entfernbaren Speichermedium oder in einem Datenlesemedium gespeichert zu werden, **dadurch gekennzeichnet, dass** es Anweisungen aufweist, um die Schritte /5/ bis /7/ eines Verfahrens nach einem der vorhergehenden Ansprüche auszuführen.

15. Computerprogrammprodukt nach Anspruch 14, **dadurch gekennzeichnet, dass** es außerdem Anweisungen aufweist, um:

   - eine Charakterisierung der Abbildungsbeziehung zu speichern;
   - den Wert des Montagewinkels ($\varepsilon$) des Fahrzeugüberwachungsgeräts (10) zwischen der optischen Achse ($D_{12}$) des fotografischen Systems (12) und der radialen Fernmessrichtung ($D_{11}$) des Messsystems (11) zu speichern; und
   - am Eingang Charakterisierungen von mindestens zwei Fluchtlinien ($L_1$-$L_9$) in mindestens einem erfassten Bild zu empfangen.

16. Computerprogrammprodukt nach Anspruch 14 oder 15, **dadurch gekennzeichnet, dass** es außerdem Anweisungen zur Berechnung eines Fehlers zwischen dem Wert der Messwinkelabweichung ($\alpha_{11}$) und einem Zielwert für die Messwinkelabweichung aufweist.

17. Fahrzeugüberwachungseznheit, die ein Fahrzeugüberwachungsgerät (10) enthält, das selbst ein Messsystem (11) und ein fotografisches System (12) enthält, die fest miteinander verbunden sind, wobei die Einheit **dadurch gekennzeichnet ist, dass** sie außerdem enthält:

   - eine Datenverarbeitungseinheit, die einen Speicher oder ein Datenlesemedium aufweist, der/das geeignet ist, um die Anweisungen eines Computerprogrammprodukts nach einem der Ansprüche 14 bis 16 zur speichern.

18. Fahrzeugüberwachungseinheit nach Anspruch 17, die außerdem ein Alarmsystem enthält, das verbunden ist, um von der Datenverarbeitungseinheit bei einer Ausführung der Anweisungen des Computerprogrammprodukts aktiviert zu werden, wenn ein Fehler zwischen dem Wert der Messwinkelabweichung ($\alpha_{11}$) und einem Zielwert für die Messwinkelabweichung höher als ein festgelegter Fehlerwert ist.

19. Fahrzeugüberwachungseinheit nach Anspruch 17 oder 18, die außerdem enthält:

   - eine Drehplatte (14), die zwischen einem Träger (15) des Fahrzeugüberwachungsgeräts (10) und dem Fahrzeugüberwachungsgerät angeordnet ist; und

- ein Steuersystem der Platte, das geeignet ist, um eine Drehung der Platte abhängig von einem Fehler zwischen dem Wert der von der Datenverarbeitungseinheit erzeugten Messwinkelabweichung ($\alpha_{11}$) und einem Zielwert für die Messwinkelabweichung zu steuern.

20. Fahrzeugüberwachungseinheit nach einem der Ansprüche 17 bis 19, wobei das Fahrzeugüberwachungsgerät von der Art Geschwindigkeitsüberwachungsgerät für die auf einer Straße (1) fahrenden Fahrzeuge (30) ist, wobei das Messsystem (11) ein System zur Geschwindigkeitsmessung durch Doppler-Effekt enthält, und eine Funkachse des Systems zur Geschwindigkeitsmessung durch Doppler-Effekt die radiale Fernmessrichtung ($D_{11}$) formt.

**Claims**

1. Method of installing an apparatus for monitoring vehicles (30) driving on a road (1), said apparatus (10) comprising a measuring system (11) and a camera system (12) coupled with one another, which method comprises the following initial steps:

/1/ characterizing an imaging relationship correlating a point (R) in each image captured by the camera system (12) with each point (P) located within an input field of said camera system, and

/2/ determining a value of a mounting angle ($\varepsilon$) of the vehicle monitoring apparatus (10), between an optical axis ($D_{12}$) of the camera system (12) and a radial distance measuring direction ($D_{11}$) of the measuring system (11), the method further comprising the following steps:

/3/ arranging the vehicle monitoring apparatus (10) near (B2) the road (1),

/4/ capturing at least one image of the road with the camera system (12) of the vehicle monitoring apparatus (10),

/5/ determining at least one vanishing point (F) in the image captured in step /4/, from at least two vanishing lines ($L_1$-$L_9$) marked out in said image,

/6/ determining a value of an optical viewing angle ($\alpha_{12}$) between the road (1) and the optical axis ($D_{12}$) of the camera system (12), from at least one coordinate of each vanishing point (F) determined in step /5/ and the imaging relationship **characterized in** step /1/, and

/7/ determining a value of a measurement angular deviation ($\alpha_{11}$) between the road (1) and the radial distance measuring direction ($D_{11}$) of the measuring system (11), from the value of the optical viewing angle ($\alpha_{12}$) determined in step /6/ and the value of the mounting angle ($\varepsilon$) determined in step /2/.

2. Method as claimed in claim 1, in which step /1/ comprises the following sub-steps:

/1-1/ determining a central point (A) of each image corresponding to the optical axis ($D_{12}$) of the camera system (12);

/1-2/ characterizing a central projection relationship linking coordinates of the point (P) located within the input field of the camera system (12) with coordinates of an intermediate point (Q) in each captured image, said central projection correlating any point of the optical axis ($D_{12}$) of the camera system (12) with the central point (A) determined in sub-step /1-1/; and

/1-3/ characterizing an optical distortion of the camera system (12) so that the imaging relationship **characterized in** step /1/ results from the central projection **characterized in** sub-step /1-2/, after which said optical distortion is applied.

3. Method as claimed in claim 1 or 2, further comprising:

/8/ calculating an error between the value of the measurement angular deviation ($\alpha_{11}$) determined in step /7/ and a target value for said measurement angular deviation; and

/9/ optionally generating an alarm signal if the error is greater than a fixed error value.

4. Method as claimed in claim 3, further comprising:

/10/ rotating the vehicle monitoring apparatus (10) in order to reduce the error between the value of the measurement angular deviation ($\alpha_{11}$) and the target value for said measurement angular deviation.

5. Method as claimed in any one of the preceding claims, further comprising a measuring step implemented for a vehicle (30) driving on the road (1), the value of the measurement angular deviation ($\alpha_{11}$) determined in step /7/ being used to obtain a measurement result for said vehicle.

6.  Method as claimed in any one of the preceding claims, in which the initial steps /1/ and /2/ are implemented in a production factory or in a technical centre providing maintenance for the vehicle monitoring apparatus (10).

7.  Method as claimed in claim 6, in which the imaging relationship is **characterized in** step /1/ from at least one image of a calibration chart, said image being captured by the camera system (12) of the vehicle monitoring apparatus (10).

8.  Method as claimed in any one of the preceding claims, in which the vehicle monitoring apparatus (10) is of the type of a mobile road monitoring apparatus.

9.  Method as claimed in any one of the preceding claims, in which at least one vanishing line ($L_1$-$L_3$) marked out in step /5/ corresponds, in the captured image, to a straight segment of a central marker line ($B_1$), of an edge ($B_2$,$B_3$) or an edge marker line of the road (1).

10. Method as claimed in any one of the preceding claims, in which at least one vanishing line ($L_4$, $L_5$) marked out in step /5/ is identified by two marker stakes ($C_1$-$C_4$) disposed on an edge of a straight segment of the road (1).

11. Method as claimed in any one of the preceding claims, in which at least one vanishing line ($L_6$, $L_7$) marked out in step /5/ is identified from points ($D_1$-$D_4$) in the captured image corresponding to two headlights (30, 40) of a vehicle driving on the road (1).

12. Method as claimed in any one of the preceding claims, in which at least one vanishing line ($L_8$, $L_9$) marked out in step /5/ is determined from positions of one same reference point ($E_1$, $E_2$) of a vehicle (50) driving on the road (1) in different images captured successively without moving the vehicle monitoring apparatus (10), said positions being plotted into a same one of said images.

13. Method as claimed in any one of the preceding claims, in which the vehicle monitoring apparatus (10) is of the type of apparatus for monitoring the speed of vehicles (30) driving on a road (1), the measuring system (11) comprising a system of measuring speed based on Doppler effect and a radioelectric axis of said Doppler effect speed measuring system constituting the radial distance measuring direction ($D_{11}$).

14. Computer programme product designed to be stored in a memory of a computer processing unit, on a portable memory support or on a computer readable support, **characterized in that** it comprises instructions for 5 executing steps /5/ to /7/ of a method as claimed in any one of the preceding claims.

15. Computer programme product as claimed in claim 14, **characterised in that** it further comprises instructions for:

    - storing a characterization of the imaging relationship;
    - storing the value of the mounting angle ($\varepsilon$) of the vehicle monitoring apparatus (10), between the optical angle ($D_{12}$) of the camera system (12) and the radial distance measuring direction ($D_{11}$) of the measuring system (11); and
    - receiving at input respective characterizations of at least two vanishing lines ($L_1$-$L_9$) in at least one captured image.

16. Computer programme product as claimed in claim 14 or 15, **characterized in that** it further comprises instructions for calculating an error between the value of the measurement angular deviation ($\alpha_{11}$) and a target value for said measurement angular deviation.

17. Vehicle monitoring set comprising a vehicle monitoring apparatus (10), comprising itself a measuring system (11) and a camera system (12) connected to one another, said set being **characterized in that** it further comprises:

    - a computer processing unit comprising a memory or a computer readable support adapted to store the instructions of a computer programme product as claimed in any one of claims 14 to 16.

18. Vehicle monitoring set as claimed in claim 17. further comprising an alarm system connected so as to be activated by the computer processing unit during execution of the instructions of the computer programme product if an error between the value of the measurement angular deviation ($\alpha_{11}$) and a target value for said measurement angular deviation is greater than a fixed error value.

19. Vehicle monitoring set as claimed in claim 17 or 18, further comprising:

- a turntable (14) disposed between a support (15) of the vehicle monitoring apparatus (10) and said vehicle monitoring apparatus; and
- a system for controlling the turntable, configured to issue a command to rotate said turntable as a function of an error between the value of the measurement angular deviation ($\alpha_{11}$) produced by the computer processing unit and a target value for said measurement angular deviation.

20. Vehicle monitoring set as claimed in any one of claims 17 to 19, in which the vehicle monitoring apparatus is of the type of apparatus for controlling the speed of vehicles (30) driving on a road (1), the measuring system (11) comprising a system for measuring speed based on Doppler effect, a radioelectric axis of said Doppler effect speed measuring system constituting the radial distance measuring direction ($D_{11}$).

FIG.1.

FIG.2.

FIG.3a.

FIG.3b.

FIG.5.

FIG.4a.

FIG.4b.

FIG.4c.

FIG.4d.